# EUROPEAN PATENT APPLICATION

(11) **EP 4 737 757 A1**
(43) Date of publication of application: **06.05.2026**
(21) Application number: 25159819.9
(22) Date of filing: 25.02.2025
(51) Int. Cl.: F16D 65/18

(54) **BRAKE APPARATUS FOR VEHICLE**

(30) Priority: 04.11.2024 KR 20240154338
(71) Applicant: Hyundai Mobis Co., Ltd., Gangnam-gu Seoul 06141 (KR)
(72) Inventor: BOO, Sang Pil, 16891 Yongin-si, Gyeonggi-do (KR); SHIN, Choong Sik, 16891 Yongin-si, Gyeonggi-do (KR); JEON, Dae Ung, 16891 Yongin-si, Gyeonggi-do (KR); YOON, Bo Ram, 16891 Yongin-si, Gyeonggi-do (KR); PARK, Sang Jun, 16891 Yongin-si, Gyeonggi-do (KR); BYOUN, Mun Hwan, 16891 Yongin-si, Gyeonggi-do (KR)
(74) Representative: Jung, Minkyu

(57) **Abstract**

A brake apparatus for a vehicle includes: a caliper body provided with a cylinder; a nut screw rotatably disposed on the cylinder; a bolt screw movable in a first direction or in a second direction opposite to the first direction in conjunction with rotation of the nut screw; a piston movably disposed in the cylinder and configured to move in the first direction by pressurization of the bolt screw and interfere with the bolt screw to restrict rotation of the bolt screw; and a retainer secured to the cylinder and configured to interfere with the piston to restrict rotation of the piston

## Description

### BACKGROUND

### FIELD

Exemplary embodiments of the present disclosure relate to a brake apparatus for a vehicle, and more particularly, to a brake apparatus for a vehicle, which may ensure stable braking performance.

### DESCRIPTION OF THE RELATED ART

In general, a vehicle brake apparatus pushes a piston through a driving force to bring a pad and a disc into close contact, and uses a friction force between the pad and the disc to brake a vehicle.

Among vehicle brake apparatuses, an electro mechanical brake (EMB) does not use hydraulic pressure, but instead has a motor-driven actuator mounted on a caliper, pressurizing a piston to generate a braking force through a mechanism that converts a rotational motion of a screw into a linear motion of a nut or converts a rotational motion of the nut into a linear motion of the screw.

The EMB is capable of active braking and independent braking for each wheel, thereby enabling not only general primary braking but also the implementation of each of the additional functions such as an anti-lock brake system (ABS), electric stability control (ESC), a traction control system (TCS), and automatic emergency braking (AEB), and the absence of hydraulic transmission delay enables higher performance.

The related art of the present disclosure is disclosed in Korean Patent Application Publication No. 10-2024-0054695 (published on April 26, 2024 and entitled "BRAKE APPARATUS FOR VEHICLE").

### SUMMARY

An objective of the present disclosure is to provide a brake apparatus for a vehicle, which may ensure stable braking performance.

A brake apparatus for a vehicle according to the present disclosure includes: a caliper body provided with a cylinder; a nut screw rotatably disposed on the cylinder; a bolt screw movable in a first direction or in a second direction opposite to the first direction in conjunction with rotation of the nut screw; a piston movably disposed in the cylinder and configured to move in the first direction by pressurization of the bolt screw and interfere with the bolt screw to restrict rotation of the bolt screw; and a retainer secured to the cylinder and configured to interfere with the piston to restrict rotation of the piston.

The piston may include: a piston body portion into which the bolt screw is inserted; a first interference portion provided on an inner peripheral surface of the piston body portion and configured to interfere with the bolt screw; and a second interference portion provided on an outer peripheral surface of the piston body portion and configured to interfere with the retainer.

The first interference portion may be formed to protrude from the inner peripheral surface of the piston body portion, and the second interference portion may be formed to be recessed on the outer peripheral surface of the piston body portion.

The second interference portion may extend along a direction parallel to the first direction and the second direction.

The bolt screw may include: a bolt body portion coupled to the nut screw by means of a ball member; a bolt head portion configured to pressurize the piston body portion; and a third interference portion provided on an outer peripheral surface of the bolt head portion and capable of coming into contact with the first interference portion.

The third interference portion may be formed as a flat surface by cutting off a portion of the outer peripheral surface of the bolt head portion.

The retainer may include: a retainer body portion, in a ring shape, disposed between the cylinder and the piston; and a fourth interference portion provided on an inner peripheral surface of the retainer body portion and capable of coming into contact with the second interference portion.

The fourth interference portion may be formed to protrude from the inner peripheral surface of the retainer body portion.

The retainer further may include a damper portion coupled to the retainer body portion and capable of coming into contact with the piston.

The damper portion may be further provided with a projection portion seated on the piston.

With the present disclosure, the second interference portion formed on the piston interferes with the fourth interference portion formed on the retainer, thereby preventing the rotation of the piston, and the third interference portion formed on the bolt head portion interferes with the first interference portion formed on the piston, thereby preventing the rotation of the bolt screw.

With the present disclosure, an elastic force of the projection portion formed on the damper portion is applied to the piston toward a central portion of the piston, thereby maintaining the centering of the piston.

With the present disclosure, a groove formed between a plurality of the projection portions may act as a grease (lubricant) pocket to form a stable lubrication film when the piston moves, thereby minimizing frictional resistance of the piston.

### BRIEF DESCRIPTION OF THE DRAWINGS

FIG. 1 is a perspective view of a brake apparatus for a vehicle, when viewed from one direction, according to embodiments of the present disclosure.
FIG. 2 is a perspective view of FIG. 1, when viewed from another direction.
FIG. 3 is a cross-sectional view schematically showing the brake apparatus for a vehicle according to a first embodiment of the present disclosure.
FIG. 4 is a partially enlarged view of FIG. 3.
FIG. 5 is an exploded perspective view of a configuration of the brake apparatus for a vehicle, when viewed from one direction, according to the first embodiment of the present disclosure.
FIG. 6 is an exploded perspective view of FIG. 5, when viewed from another direction.
FIG. 7 is a cross-sectional view schematically showing the brake apparatus for a vehicle according to a second embodiment of the present disclosure.
FIG. 8 is a partially enlarged view of FIG. 7.
FIG. 9 is an exploded perspective view of a configuration of the brake apparatus for a vehicle, when viewed from one direction, according to the second embodiment of the present disclosure.
FIG. 10 is an exploded perspective view of FIG. 9, when viewed from another direction.
FIGS. 11 and 12 are partially enlarged cross-sectional views schematically showing an assembly process of the brake apparatus for a vehicle according to embodiments of the present disclosure.

### DETAILED DESCRIPTION

Hereinafter, a brake apparatus for a vehicle will be described with reference to the accompanying drawings through various exemplary embodiments. It should be considered that the thickness of each line or the size of each component in the drawings may be exaggeratedly illustrated for clarity and convenience of description. In addition, the terms as used herein are defined in consideration of functions thereof in the present disclosure, and these terms may change depending on a user or operator's intention or practice. Therefore, these terms should be defined based on the entirety of the disclosure set forth herein.

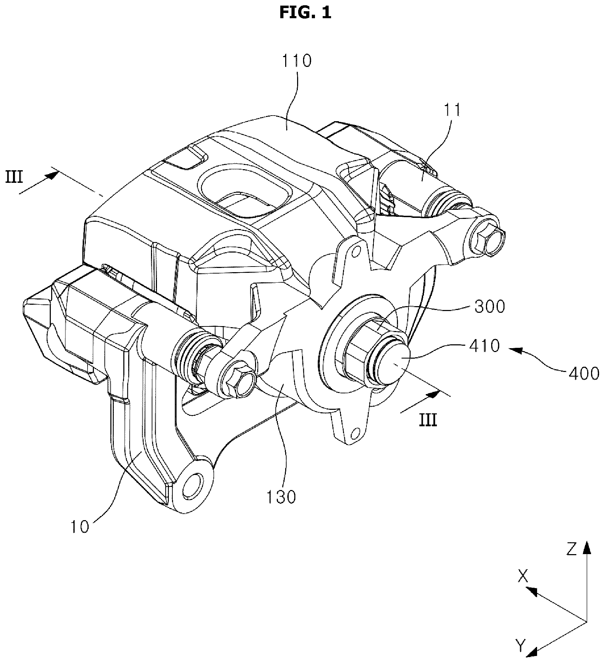

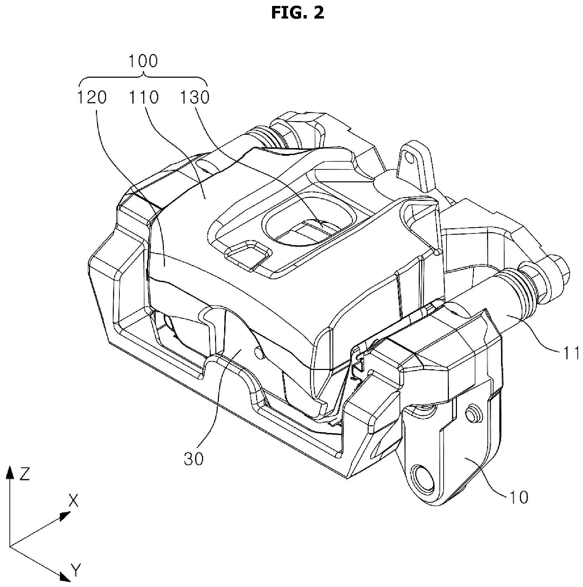

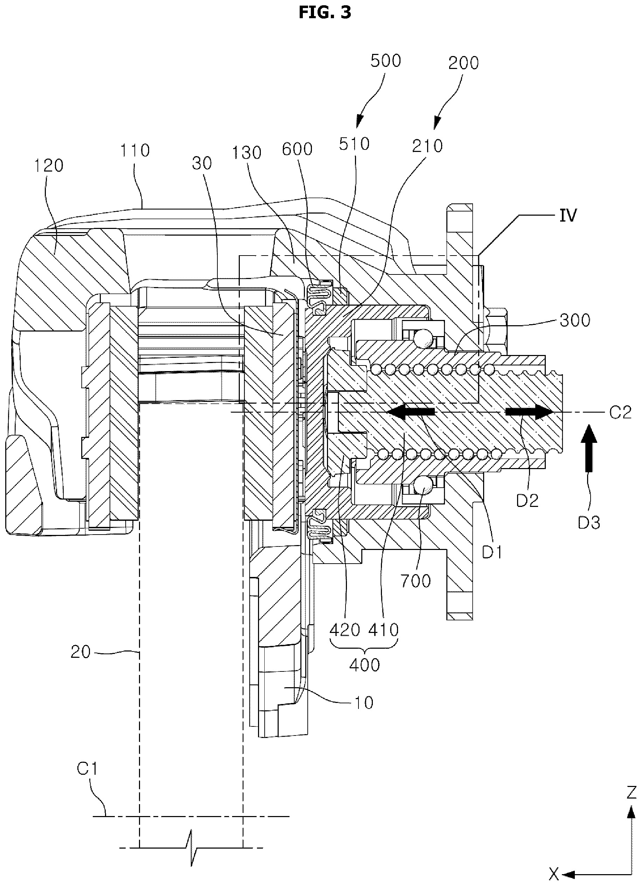

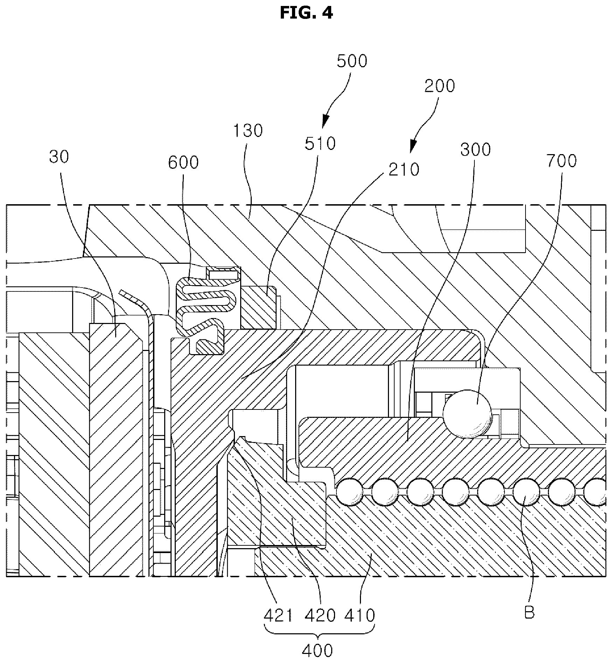

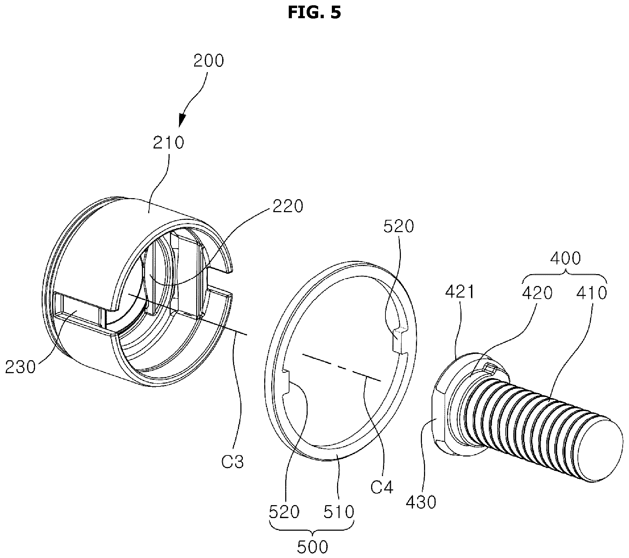

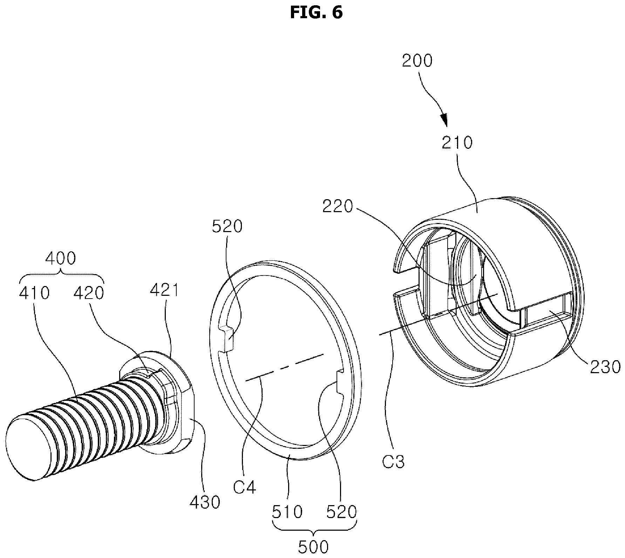

FIG. 1 is a perspective view of a brake apparatus for a vehicle, when viewed from one direction, according to embodiments of the present disclosure. FIG. 2 is a perspective view of FIG. 1, when viewed from another direction. FIG. 3 is a cross-sectional view schematically showing the brake apparatus for a vehicle according to a first embodiment of the present disclosure. FIG. 4 is a partially enlarged view of FIG. 3. FIG. 5 is an exploded perspective view of a configuration of the brake apparatus for a vehicle, when viewed from one direction, according to the first embodiment of the present disclosure. FIG. 6 is an exploded perspective view of FIG. 5, when viewed from another direction.

Referring to FIGS. 1 to 6, the brake apparatus for a vehicle according to the first embodiment of the present disclosure includes a caliper body 100, a piston 200, a nut screw 300, a bolt screw 400, and a retainer 500, which will be described in detail below.

The caliper body 100 may form an approximate exterior appearance of the brake apparatus for a vehicle according to the present embodiment, and may support as a whole the piston 200, the nut screw 300, the bolt screw 400, and the retainer 500.

The caliper body 100 according to the present embodiment may include a bridge 110, a finger 120, and a cylinder 130.

The bridge 110 may form a central exterior appearance of the caliper body 100, and may support the finger 120 and the cylinder 130. The bridge 110 may be connected to a carrier 10, fixed to a knuckle (not illustrated) or the like, by means of a guide rod 11.

The bridge 110 may be connected to the carrier 10 to be capable of reciprocating along a first direction D1 or a second direction D2. The first direction D1 and the second direction D2 may be exemplified by directions, which are parallel to a central axis C1 of a brake disc 20, i.e., the X-axis in FIG. 3, and are opposite to each other.

A lower surface of the bridge 110 may be disposed to face a peripheral surface of the brake disk 20 by being spaced apart set spacing from the same. Both sides of the bridge 110 may extend along the first direction D1 and the second direction D2, respectively, with respect to the brake disc 20.

A pair of brake pads 30 may be disposed below the bridge 110. The pair of brake pads 30 may be spaced apart from each other along the central axis C1 of the brake disc 20. The pair of brake pads 30 may be disposed to face each other with the brake disc 20 interposed therebetween.

Any one brake pad 30 of the pair of brake pads 30 may be disposed to be spaced apart from the brake disc 20 along the first direction D1, and the other brake pad 30 may be disposed to be spaced apart from the brake disc 20 along the second direction D2.

The pair of brake pads 30 may be supported on the carrier 10 or the bridge 110 to be slidably movable in the first direction D1 and the second direction D2. A friction pad including a material having a high coefficient of friction, such as rubber, may be attached to one surface of the brake pad 30 facing the brake disc 20.

The finger 120 may extend downward from one side of the bridge 110. The finger 120 may be disposed to face any one brake pad 30 of the pair of brake pads 30.

The finger 120 may be disposed to face the brake pad 30, spaced apart from the brake disc 20 in the first direction D1, of the pair of brake pads 30.

When the bridge 110 moves along the second direction D2, the finger 120 may pressurize the brake pad 30, spaced apart from the brake disc 20 in the first direction D1, toward the brake disc 20.

The cylinder 130 may extend downward from the other side of the bridge 110. The cylinder 130 may be formed in a cylinder shape with a hollow interior and one side open. The open side of the cylinder 130 may be disposed to face the other brake pad 30 of the pair of brake pads 30.

The open side of the cylinder 130 may be disposed to face the brake pad 30, spaced apart from the brake disc 20 in the second direction D2, of the pair of brake pads 30. The open side of the cylinder 130 may be spaced apart set spacing from the brake pad 30 spaced apart from the brake disc 20 in the second direction D2.

A central axis C2 of the cylinder 130 may be disposed parallel to the central axis C1 of the brake disc 20. The central axis C2 of the cylinder 130 may be spaced apart from the central axis C1 of the brake disc 20 along a third direction D3.

The third direction D3 may be exemplified by a direction, which is perpendicular to the first direction D1 and the second direction D2 and directed from the central axis C1 of the brake disc 20 toward the central axis C2 of the cylinder 130.

The third direction D3 may be a direction perpendicular to a ground surface, i.e., a direction rising along the z-axis direction in FIG. 3, when the lower surface of the bridge 110 is disposed parallel to the ground surface.

The piston 200 may be installed in the cylinder 130 to be movable in the first direction D1 or the second direction D2. The piston 200 may be disposed inside the cylinder 130. The piston 200 may be formed in a hollow shape with one side open. A closed side of the piston 200 may be disposed to be directed toward the brake pad 30, which is disposed to face the cylinder 130.

The open side of the piston 200 may be disposed to be directed toward an internal space of the cylinder 130. An outer surface of the piston 200 may be supported on an inner surface of the cylinder 130 to be slidably movable. Alternatively, the outer surface of the piston 200 may be spaced apart a set distance from the inner surface of the cylinder 130 to form a clearance.

When moving in the first direction D1, the piston 200 may protrude toward the outside of the cylinder 130, and may pressurize the brake pad 30 disposed to face the cylinder 130 toward the brake disc 20.

The bridge 110 may move in the second direction D2 by a reaction force generated between the piston 200 and the brake pad 30. When moving in the second direction D2, the piston 200 may release the pressurization force applied to the brake pad 30, and may be separated from the brake pad 30.

The piston 200 may interfere with the bolt screw 400 to restrain rotation of the bolt screw 400. The bolt screw 400 may interfere with the piston 200 to restrain axial rotation of the bolt screw 400. The piston 200 may include a piston body portion 210, a first interference portion 220, and a second interference portion 230.

The piston body portion 210 may form an overall exterior appearance of the piston 200, and may be formed in a cylinder shape with a hollow interior. The bolt screw 400 may be inserted into the piston body portion 210. To be more specific, a bolt head portion 420 may be inserted into the piston body portion 210.

The first interference portion 220 may be provided on an inner peripheral surface of the piston body portion 210. The first interference portion 220 may interfere with the bolt screw 400. To be more specific, the first interference portion 220 may interfere with the bolt head portion 420.

The first interference portion 220 may be formed to protrude from the inner peripheral surface of the piston body portion 210. The first interference portion 220 may extend, with a set thickness, from the inner peripheral surface of the piston body portion 210 toward a central portion of the piston body portion 210. The first interference portion 220 may be formed as a flat surface.

In another embodiment, if a third interference portion 430 has a convex shape, the first interference portion 220 may also be formed to be recessed on the inner peripheral surface of the piston body portion 210.

A plurality of the first interference portions 220 may be provided. The plurality of the first interference portions 220 may be disposed to be spaced apart from each other along a circumferential direction of the piston body portion 210. For example, a pair of the first interference portions 220 may be disposed to face each other.

The pair of the first interference portions 220 may be disposed on both sides of the piston body portion 210. To be more specific, the pair of the first interference portions 220 may be disposed at the 3 o'clock and 9 o'clock positions of the piston body portion 210, respectively, when the piston body portion 210 is viewed from the front.

The second interference portion 230 may be provided on an outer peripheral surface of the piston body portion 210. The second interference portion 230 may interfere with the retainer 500. To be more specific, the second interference portion 230 may interfere with a fourth interference portion 520.

The second interference portion 230 may be formed to be recessed on the outer peripheral surface of the piston body portion 210. The second interference portion 230 may be formed to have a recess shape.

In another embodiment, if the fourth interference portion 520 has a concave shape, the second interference portion 230 may also be formed to protrude from the outer peripheral surface of the piston body portion 210.

The second interference portion 230 may guide a linear movement of the piston 200 moving in the first direction D1 or the second direction D2. The second interference portion 230 may extend along a direction of a central axis C3 of the piston 200.

The second interference portion 230 may extend along a lengthwise direction of the piston body portion 210, i.e., along a direction parallel to the first direction D1 and/or the second direction D2. The second interference portion 230 may be formed in a long-hole shape having a set length.

A piston boot 600 may be installed inside the cylinder 130 to prevent an entry of external foreign substances and to make the interior of the cylinder 130 watertight. The piston boot 600 may be installed between the cylinder 130 and the piston 200. The piston boot 600 may be coupled to the piston body portion 210, and may be press-fit into the cylinder 130.

The piston boot 600 may be formed to surround the piston body portion 210. The piston boot 600 may be disposed along the first direction D1 from the second interference portion 230 and the retainer 500. The piston boot 600 may come into contact with the retainer 500.

The piston boot 600 may include an elastically deformable material. For example, the piston boot 600 may be made of a rubber material. The piston boot 600 may be formed to have a corrugated shape.

The nut screw 300 may be rotatably disposed in the cylinder 130, and may be connected to the bolt screw 400. A bearing 700 that rotatably supports the nut screw 300 may be installed inside the cylinder 130. The bearing 700 may be exemplified by a ball bearing provided between the cylinder 130 and the nut screw 300.

The nut screw 300 may be formed in a hollow shape with a hollow interior and both ends open. The nut screw 300 may be disposed inside the cylinder 130, and a central axis of the nut screw 300 may be located coaxially with the central axis C2 of the cylinder 130.

One side (the left side in FIG. 3) of the nut screw 300 may be disposed to face an inner surface of the piston 200 by being spaced apart set spacing from the same. The other side (the right side in FIG. 3) of the nut screw 300 may protrude to the outside of the cylinder 130 by penetrating a closed side of the cylinder 130.

The other side of the nut screw 300 may be connected to a power transmission means (not illustrated) that receives a rotational force from an actuator (not illustrated). The actuator may be exemplified by various types of electric motors capable of generating a rotational force by receiving power from a vehicle battery (not illustrated), or the like.

The power transmission means may transmit the rotational force of the actuator to the nut screw 300. The power transmission means may include a plurality of gears that sequentially engage between the actuator and the nut screw 300. However, the power transmission means is not limited to such a configuration, and the type of power transmission means, capable of receiving a rotational force from the actuator to rotate the nut screw 300, may vary with a design change.

When the actuator operates, the nut screw 300 may receive, through the power transmission means, the rotational force generated from the actuator, and may rotate clockwise or counterclockwise around the central axis of the nut screw 300.

The nut screw 300 may be disposed such that an inner surface of the nut screw 300 faces an outer surface of the bolt screw 400. A ball rail may be formed on an inner peripheral surface of the nut screw 300, wherein one side of the circumference of a ball member B in a sphere shape is seated on the ball rail. The ball rail may extend in a spiral shape along a lengthwise direction of the nut screw 300 to provide a circulation path for the ball member B.

In conjunction with the rotation of the nut screw 300, the bolt screw 400 may move in the first direction D1 or the second direction D2 inside the cylinder 130. The bolt screw 400 may be disposed inside the nut screw 300. The bolt screw 400 may be disposed to penetrate both ends of the nut screw 300.

When moving in the first direction D1, the bolt screw 400 may pressurize the piston 200 in the first direction D1, and when moving in the second direction D2, the bolt screw 400 may release the pressure on the piston 200.

The bolt screw 400 may include a bolt body portion 410, the bolt head portion 420, and the third interference portion 430.

The bolt body portion 410 may be formed in a rod shape having roughly a circular cross-section. The bolt body portion 410 may be disposed inside the cylinder 130, and a central axis of the bolt body portion 410 may be located coaxially with the central axis C2 of the cylinder 130. The bolt body portion 410 may be coupled to the nut screw 300 by means of the ball member B.

A ball rail may be formed on an outer peripheral surface of the bolt body portion 410, wherein the other side of the circumference of the ball member B is seated on the ball rail. The ball rail may extend in a spiral shape along a lengthwise direction of the bolt body portion 410 to provide a circulation path for the ball member B. Accordingly, when the nut screw 300 rotates, the bolt body portion 410 may move in the first direction D1 or the second direction D2 by a circular movement of the ball member B.

The bolt head portion 420 may be disposed between the bolt body portion 410 and the piston 200. The bolt head portion 420 may be formed to have roughly a circular cross-section. The bolt head portion 420 may be inserted into the piston body portion 210. The bolt head portion 420 may be disposed to face an inner surface of the piston body portion 210 by being spaced apart set spacing from the same.

The bolt head portion 420 may pressurize the piston body portion 210. The bolt head portion 420 may pressurize the piston body portion 210 in the first direction D1 or release the pressure on the piston body portion 210 depending on the direction of movement of the bolt body portion 410.

The bolt head portion 420 may be provided on one side (the left side in FIG. 3) of the bolt body portion 410 disposed to face the piston 200.

A diameter of the bolt head portion 420 may be formed larger than a diameter of the bolt body portion 410. An outer diameter of the bolt head portion 420 may be formed larger than an inner diameter of the nut screw 300. Accordingly, the bolt head portion 420 may protrude from the nut screw 300.

When the bolt body portion 410 moves in the first direction D1, the bolt head portion 420 may come into contact with the inner surface of the piston body portion 210, and may pressurize the piston body portion 210 in the first direction D1.

When the bolt body portion 410 moves in the second direction D2, the bolt head portion 420 may be separated from the inner surface of the piston body portion 210, and may release the pressurization force applied to the piston body portion 210.

The third interference portion 430 may be provided on an outer peripheral surface of the bolt head portion 420. The third interference portion 430 may come into contact with the first interference portion 220. The third interference portion 430 may interfere with the first interference portion 220.

The third interference portion 430 may be formed as a flat surface to correspond to the first interference portion 220. The third interference portion 430 may be formed as a flat surface by cutting off a portion of the outer peripheral surface of the bolt head portion 420.

The third interference portion 430 may come into surface contact with the first interference portion 220. In another embodiment, if the first interference portion 220 has a concave shape, the third interference portion 430 may also be formed to protrude from the outer peripheral surface of the bolt head portion 420.

A plurality of the third interference portions 430 may be provided. The plurality of the third interference portions 430 may be disposed to be spaced apart from each other along a circumferential direction of the bolt head portion 420. For example, a pair of the third interference portions 430 may be disposed to face each other.

The pair of the third interference portions 430 may be disposed on both sides of the bolt head portion 420. To be more specific, the pair of the third interference portions 430 may be disposed at the 3 o'clock and 9 o'clock positions of the bolt head portion 420, respectively, when the bolt head portion 420 is viewed from the front. That is, the third interference portion 430 may be disposed at a location corresponding to the first interference portion 220. Since the third interference portion 430 interferes with the first interference portion 220, axial rotation of the bolt screw 400 may be restricted.

The bolt head portion 420 according to the present embodiment may further be provided with a pressurization portion 421 coming into contact with the inner surface of the piston body portion 210.

The pressurization portion 421 may be formed to protrude from the bolt head portion 420. The pressurization portion 421 may protrude from the outer peripheral surface of the bolt head portion 420, and may be formed along the circumferential direction of the bolt head portion 420.

The pressurization portion 421 may be provided on one side (the left side in FIG. 4) of the bolt head portion 420 directed toward a direction in which the piston 200 is located.

The retainer 500 may be secured to the cylinder 130. The retainer 500 may interfere with the piston 200 to restrain rotation of the piston 200. The piston 200 may interfere with the retainer 500 to restrain axial rotation of the piston 200. The retainer 500 may include a metal material.

The retainer 500 may include a retainer body portion 510 and the fourth interference portion 520.

The retainer body portion 510 may be formed in a ring shape. The retainer body portion 510 may be disposed between the cylinder 130 and the piston 200. The retainer body portion 510 may be interposed between the inner surface of the cylinder 130 and the outer peripheral surface of the piston body portion 210.

An outer peripheral surface of the retainer body portion 510 may come into close contact with the inner surface of the cylinder 130, and an inner peripheral surface of the retainer body portion 510 may come into close contact with the outer peripheral surface of the piston body portion 210.

The retainer body portion 510 may be secured to the cylinder 130 in a way that the retainer body portion 510 is secured to the inner surface of the cylinder 130 by a coupling method such as bolting or pin coupling, and may be secured to the cylinder 130 in a way that the retainer body portion 510 is secured inside the cylinder 130 by an assembly method such as press-fitting or serration press-fitting.

The fourth interference portion 520 may be provided on the inner peripheral surface of the retainer body portion 510. The fourth interference portion 520 may come into contact with the second interference portion 230. The fourth interference portion 520 may interfere with the second interference portion 230.

The fourth interference portion 520 may be formed to protrude from the inner peripheral surface of the retainer body portion 510. The fourth interference portion 520 may be formed to have roughly a protrusion shape. The fourth interference portion 520 may extend, with a set thickness, from the inner peripheral surface of the retainer body portion 510 toward a central portion of the retainer body portion 510.

The fourth interference portion 520 may be accommodated in the second interference portion 230 to be seated inside the second interference portion 230.

In another embodiment, if the second interference portion 230 has a convex shape, the fourth interference portion 520 may also be formed to be indented on the inner peripheral surface of the retainer body portion 510.

A plurality of the fourth interference portions 520 may be provided. The plurality of the fourth interference portions 520 may be disposed to be spaced apart from each other along a circumferential direction of the retainer body portion 510. For example, a pair of the fourth interference portions 520 may be disposed to face each other.

The pair of the fourth interference portions 520 may be disposed on both sides of the retainer body portion 510. To be more specific, the pair of the fourth interference portions 520 may be disposed at the 3 o'clock and 9 o'clock positions of the retainer body portion 510, when the retainer body portion 510 is viewed from the front. That is, the fourth interference portion 520 may be disposed at a location corresponding to the second interference portion 230.

Since the retainer body portion 510 is secured to the cylinder 130, and the fourth interference portion 520 interferes with the second interference portion 230, axial rotation of the piston 200 may be restricted. Since the axial rotation of the piston 200 is restricted, axial rotation of the bolt screw 400 may be restricted.

In addition, since the fourth interference portion 520 is seated inside the second interference portion 230, the linear movement of the piston 200 moving in the first direction D1 or the second direction D2 may be guided.

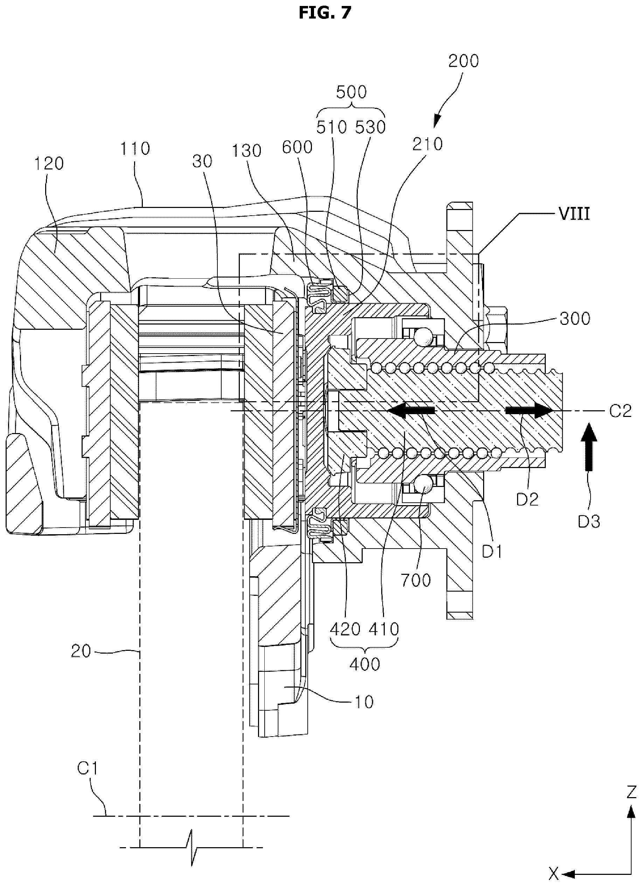

FIG. 7 is a cross-sectional view schematically showing the brake apparatus for a vehicle according to a second embodiment of the present disclosure.

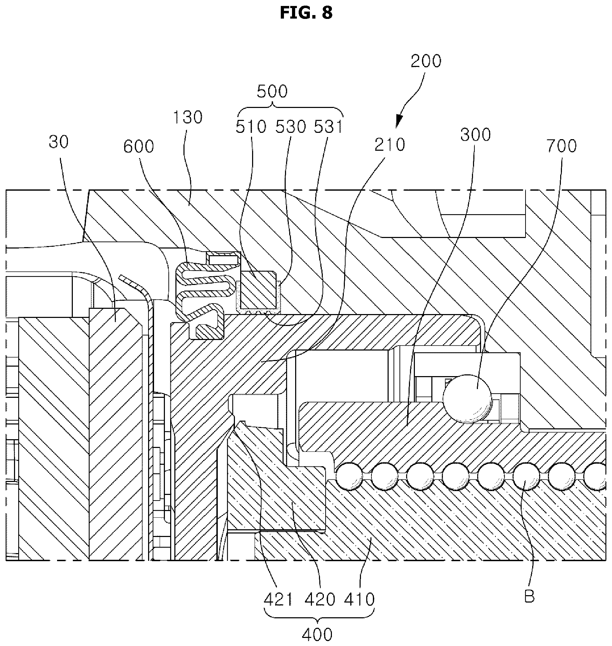

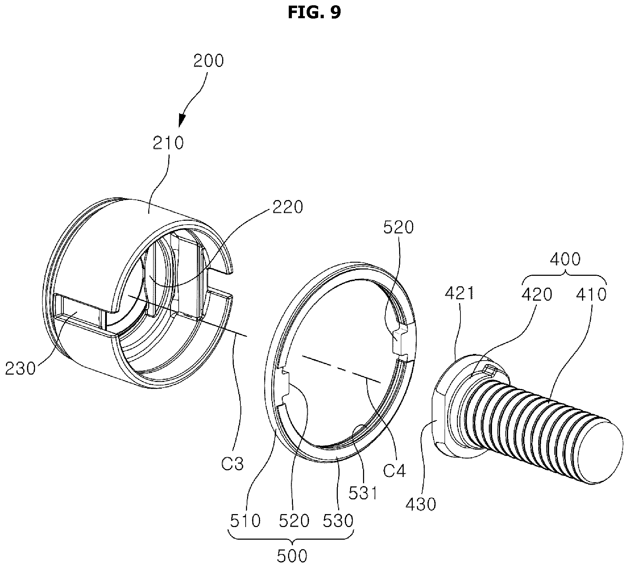

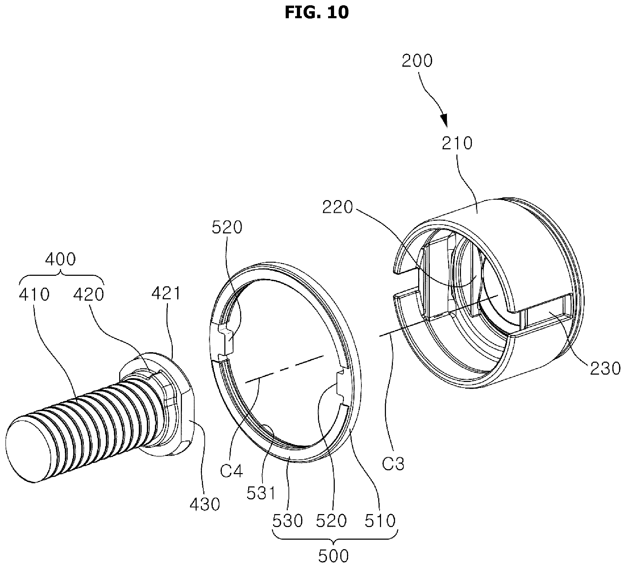

FIG. 8 is a partially enlarged view of FIG. 7. FIG. 9 is an exploded perspective view of a configuration of the brake apparatus for a vehicle, when viewed from one direction, according to the second embodiment of the present disclosure. FIG. 10 is an exploded perspective view of FIG. 9, when viewed from another direction.

Referring to FIGS. 1 to 10, the brake apparatus for a vehicle according to the second embodiment of the present disclosure includes the caliper body 100, the piston 200, the nut screw 300, the bolt screw 400, and the retainer 500.

In describing the brake apparatus for a vehicle according to the second embodiment of the present disclosure, another embodiment of the retainer 500 in the brake apparatus for a vehicle according to the first embodiment of the present disclosure and a damper portion 530 not described in the brake apparatus for a vehicle according to the first embodiment of the present disclosure will be described below.

For the rest of the configuration of the brake apparatus for a vehicle according to the second embodiment of the present disclosure, the same description of the brake apparatus for a vehicle according to the first embodiment of the present disclosure may be applied.

The retainer 500 may be secured to the cylinder 130. The retainer 500 may interfere with the piston 200 to restrain rotation of the piston 200. The piston 200 may interfere with the retainer 500 to restrain axial rotation of the piston 200. The retainer 500 may include a metal material.

The retainer 500 may include the retainer body portion 510, the fourth interference portion 520, and the damper portion 530.

The retainer body portion 510 may be formed in a ring shape. The retainer body portion 510 may be disposed between the cylinder 130 and the piston 200. The retainer body portion 510 may be interposed between the inner surface of the cylinder 130 and the outer peripheral surface of the piston body portion 210.

The retainer body portion 510 may be secured to the cylinder 130 in a way that the retainer body portion 510 is secured to the inner surface of the cylinder 130 by a coupling method such as bolting or pin coupling, and may be secured to the cylinder 130 in a way that the retainer body portion 510 is secured inside the cylinder 130 by an assembly method such as press-fitting or serration press-fitting.

The fourth interference portion 520 may be provided on the inner peripheral surface of the retainer body portion 510. The fourth interference portion 520 may come into contact with the second interference portion 230. The fourth interference portion 520 may interfere with the second interference portion 230.

The fourth interference portion 520 may be formed to protrude from the inner peripheral surface of the retainer body portion 510. The fourth interference portion 520 may be formed to have roughly a protrusion shape. The fourth interference portion 520 may extend, with a set thickness, from the inner peripheral surface of the retainer body portion 510 toward the central portion of the retainer body portion 510.

The fourth interference portion 520 may be accommodated in the second interference portion 230 to be seated inside the second interference portion 230.

In another embodiment, if the second interference portion 230 has a convex shape, the fourth interference portion 520 may also be formed to be indented on the inner peripheral surface of the retainer body portion 510.

A plurality of the fourth interference portions 520 may be provided. The plurality of the fourth interference portions 520 may be disposed to be spaced apart from each other along the circumferential direction of the retainer body portion 510. For example, a pair of the fourth interference portions 520 may be disposed to face each other.

The pair of the fourth interference portions 520 may be disposed on both sides of the retainer body portion 510. To be more specific, the pair of the fourth interference portions 520 may be disposed at the 3 o'clock and 9 o'clock positions of the retainer body portion 510, when the retainer body portion 510 is viewed from the front. That is, the fourth interference portion 520 may be disposed at a location corresponding to the second interference portion 230.

Since the retainer body portion 510 is secured to the cylinder 130, and the fourth interference portion 520 interferes with the second interference portion 230, axial rotation of the piston 200 may be restricted. Since the axial rotation of the piston 200 is restricted, axial rotation of the bolt screw 400 may be restricted.

In addition, since the fourth interference portion 520 is seated inside the second interference portion 230, the linear movement of the piston 200 moving in the first direction D1 or the second direction D2 may be guided.

The damper portion 530 may be coupled to the retainer body portion 510. The damper portion 530 may be provided and configured to surround the retainer body portion 510. The damper portion 530 may come into contact with the piston 200.

The damper portion 530 may be disposed between the retainer body portion 510 and the piston 200. The damper portion 530 may be disposed between the inner peripheral surface of the retainer body portion 510 and the outer peripheral surface of the piston body portion 210. The damper portion 530 may come into close contact with the piston body portion 210.

The damper portion 530 may include an elastically deformable material. For example, the damper portion 530 may be made of a rubber material. The damper portion 530 may be integrally provided with the retainer body portion 510. The damper portion 530 may be insert-molded into the retainer 500. The fourth interference portion 520 may protrude from the damper portion 530.

The damper portion 530 may elastically support the piston 200. To be more specific, the damper portion 530 may elastically support the piston body portion 210.

The damper portion 530 may be further provided with a projection portion 531. The projection portion 531 may be formed to protrude from an outer surface of the damper portion 530 coming into contact with the piston body portion 210. The projection portion 531 may be seated on the piston 200. The projection portion 531 may be seated on the outer peripheral surface of the piston body portion 210.

A plurality of the projection portions 531 may be disposed, along a direction of a central axis C4 of the retainer 500, to be spaced apart from each other. Here, the central axis C4 of the retainer 500 may be located coaxially with the central axis C3 of the piston 200.

An elastic force of the projection portion 531 is applied to the piston 200 toward a central portion of the piston 200, such that the piston 200 may maintain centering. As a result, the piston 200 may move smoothly in a straight line when moving in the first direction D1 or the second direction D2, thereby ensuring the straight-line stability of the piston 200.

In addition, the projection portion 531 may absorb vibrations generated when the piston 200 moves in the first direction D1 or the second direction D2, thereby reducing rattle noise.

A groove formed between the plurality of the projection portions 531, which are disposed, along the direction of a central axis C4 of the retainer 500, to be spaced apart from each other, may act as a grease (lubricant) pocket to form a stable lubrication film when the piston 200 moves in the first direction D1 or the second direction D2, thereby minimizing frictional resistance of the piston 200.

The following is the description of an assembly process of the brake apparatus for a vehicle with the configuration described above according to embodiments of the present disclosure.

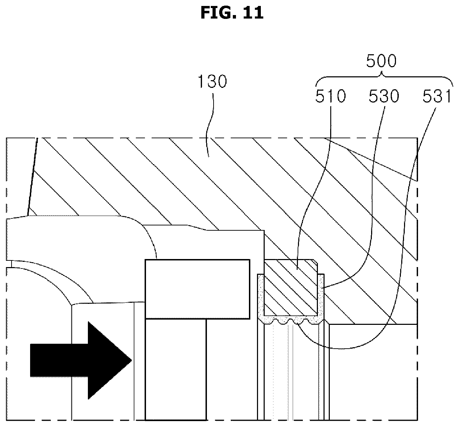

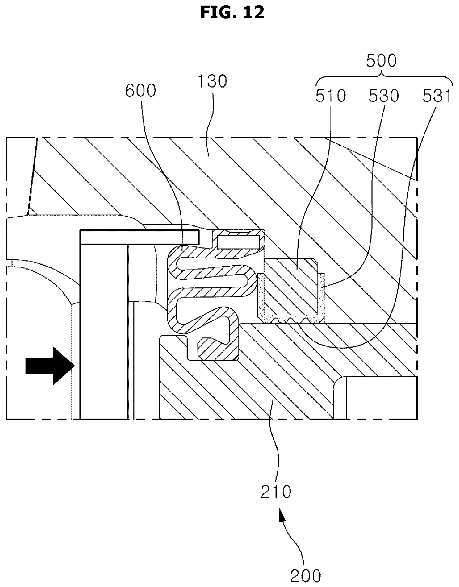

FIGS. 11 and 12 are partially enlarged cross-sectional views schematically showing an assembly process of the brake apparatus for a vehicle according to embodiments of the present disclosure.

Referring to FIG. 11, the retainer 500 is press-fit into the cylinder 130. A load is applied to the retainer body portion 510 in the second direction D2 to press-fit the retainer body portion 510 into the cylinder 130. The retainer body portion 510 may be secured to the cylinder 130 in a way that the retainer body portion 510 is secured inside the cylinder 130 by an assembly method such as press-fitting or serration press-fitting, and may be secured to the cylinder 130 in a way that the retainer body portion 510 is secured to the inner surface of the cylinder 130 by a coupling method such as bolting or pin coupling.

Referring to FIG. 12, the piston 200 is inserted into the cylinder 130. The piston boot 600 is press-fit into the cylinder 130 by applying a load, which is smaller than the load applied to the retainer body portion 510, to the piston boot 600, which is coupled to the piston body portion 210, in the second direction.

With the brake apparatus for a vehicle according to embodiments of the present disclosure, the second interference portion 230 formed on the piston 200 interferes with the fourth interference portion 520 formed on the retainer 500, thereby preventing the rotation of the piston 200, and the third interference portion 430 formed on the bolt head portion 420 interferes with the first interference portion 220 formed on the piston 200, thereby preventing the rotation of the bolt screw 400.

With the brake apparatus for a vehicle according to embodiments of the present disclosure, the elastic force of the projection portion 531 formed on the damper portion 530 is applied to the piston 200 toward the central portion of the piston 200, thereby maintaining the centering of the piston 200.

With the brake apparatus for a vehicle according to embodiments of the present disclosure, the groove formed between the plurality of the projection portions 531 may act as a grease (lubricant) pocket to form a stable lubrication film when the piston 200 moves, thereby minimizing frictional resistance of the piston 200.

Although the present disclosure has been described with reference to the embodiments illustrated in the drawings, the embodiments are for illustrative purposes only, and those skilled in the art will appreciate that various modifications and other equivalent embodiments are possible from the embodiments. Therefore, the true technical scope of the present disclosure should be defined by the following claims.

## Claims

1. A brake apparatus for a vehicle, the brake apparatus comprising:
a caliper body provided with a cylinder;
a nut screw rotatably disposed on the cylinder;
a bolt screw movable in a first direction or in a second direction opposite to the first direction in conjunction with rotation of the nut screw;
a piston movably disposed in the cylinder and configured to move in the first direction by pressurization of the bolt screw and interfere with the bolt screw to restrict rotation of the bolt screw; and
a retainer secured to the cylinder and configured to interfere with the piston to restrict rotation of the piston.

2. The brake apparatus for the vehicle of claim 1, wherein the piston comprises:
a piston body portion into which the bolt screw is inserted;
a first interference portion provided on an inner peripheral surface of the piston body portion and configured to interfere with the bolt screw; and
a second interference portion provided on an outer peripheral surface of the piston body portion and configured to interfere with the retainer.

3. The brake apparatus for the vehicle of claim 2, wherein:
the first interference portion is formed to protrude from the inner peripheral surface of the piston body portion, and
the second interference portion is formed to be recessed on the outer peripheral surface of the piston body portion.

4. The brake apparatus for the vehicle of claim 2 or 3, wherein the second interference portion extends along a central axis of the piston.

5. The brake apparatus for the vehicle of any one of claims 2 to 4, wherein the bolt screw comprises:
a bolt body portion coupled to the nut screw by means of a ball member;
a bolt head portion configured to pressurize the piston body portion; and
a third interference portion provided on an outer peripheral surface of the bolt head portion and capable of coming into contact with the first interference portion.

6. The brake apparatus for the vehicle of claim 5, wherein the third interference portion is formed as a flat surface by cutting off a portion of the outer peripheral surface of the bolt head portion.

7. The brake apparatus for the vehicle of any one of claims 2 to 6, wherein the retainer comprises:
a retainer body portion, in a ring shape, disposed between the cylinder and the piston; and
a fourth interference portion provided on an inner peripheral surface of the retainer body portion and capable of coming into contact with the second interference portion.

8. The brake apparatus for the vehicle of claim 7, wherein the fourth interference portion is formed to protrude from the inner peripheral surface of the retainer body portion.

9. The brake apparatus for the vehicle of claim 7 or 8, wherein the retainer further comprises a damper portion coupled to the retainer body portion and capable of coming into contact with the piston.

10. The brake apparatus for the vehicle of claim 9, wherein the damper portion is further provided with a projection portion seated on the piston.
